(19) Europäisches Patentamt
European Patent Office
Office européen des brevets

(11) **EP 1 381 530 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(21) Anmeldenummer: **02706641.4**

(22) Anmeldetag: **30.01.2002**

(51) Int Cl.:
*B60K 31/00* (2006.01)      *G01S 13/72* (2006.01)
*G08G 1/16* (2006.01)

(86) Internationale Anmeldenummer:
**PCT/DE2002/000305**

(87) Internationale Veröffentlichungsnummer:
**WO 2002/076780 (03.10.2002 Gazette 2002/40)**

(54) **VERFAHREN UND VORRICHTUNG ZUR UNTERSTÜTZUNG EINES ÜBERHOLVORGANGS BEI KRAFTFAHRZEUGEN**

METHOD AND DEVICE FOR ASSISTING AN OVERTAKING MANEUVER IN MOTOR VEHICLES

PROCEDE ET DISPOSITIF ASSISTANT UNE MANOEUVRE DE DEPASSEMENT POUR DES VEHICULES AUTOMOBILES

(84) Benannte Vertragsstaaten:
**DE GB IT**

(30) Priorität: **23.03.2001 DE 10114187**

(43) Veröffentlichungstag der Anmeldung:
**21.01.2004 Patentblatt 2004/04**

(73) Patentinhaber: **ROBERT BOSCH GMBH**
**70442 Stuttgart (DE)**

(72) Erfinder:
• **WINNER, Hermann**
**76467 Bietigheim (DE)**
• **LAUXMANN, Ralph**
**70825 Korntal-Muenchingen (DE)**
• **IRION, Albrecht**
**70563 Stuttgart (DE)**

(56) Entgegenhaltungen:
WO-A-00/36435          WO-A-01/98101
WO-A-99/30919          DE-A- 4 200 694

**Beschreibung**

Stand der Technik

Die Erfindung betrifft ein Verfahren zur Unterstützung eines Überholvorgangs bei Kraftfahrzeugen mit einer Abstands- und Geschwindigkeitsregeleinrichtung sowie eine Vorrichtung zur Durchführuing dieses

Verfahrens gemäß dem Oberbegriff des Anspruchs 1 sowie des Anspruchs 11.

Für Kraftfahrzeuge sind Abstands- und Geschwindigkeitsregeleinrichtungen bekannt, die auch als ACC-Systeme ("Adaptive Cruise Control") bezeichnet werden. Bei diesen Systemen werden Objekte, beispielsweise vorausfahrende Fahrzeuge, die sich auf der von dem eigenen Fahrzeug befahrenen Fahrspur befinden, mit Hilfe einer Sensoreinrichtung erfaßt. Typischerweise besteht die Sensoreinrichtung aus einem Radarsystem, mit dem der Abstand und die Relativgeschwindigkeit des vorausfahrenden Fahrzeugs gemessen werden können. Mit Hilfe eines richtungssensitiven Radarsystems oder durch Zuhilfenahme zusätzlicher Parameter, beispielsweise des Lenkradeinschlags des eigenen Fahrzeugs, lassen sich die erfaßten Objekte auf ihre Plausibilität überprüfen, so daß beispielsweise Fahrzeuge auf der eigenen Spur von Verkehrsschildern oder Markierungen am Fahrbahnrad oder von Fahrzeugen auf anderen Spuren unterschieden werden können. Wenn sich ein vorausfahrendes Fahrzeug auf der eigenen Spur im Ortungsbereich des Radars befindet, wird, die Fahrgeschwindigkeit durch Eingriff in das Antriebs- und Bremssystem des Fahrzeugs so geregelt, daß ein geschwindigkeitsabhängiger Sicherheitsabstand zum vorausfahrenden Fahrzeug eingehalten wird. Befindet sich dagegen kein Fahrzeug im Ortungsbereich auf der eigenen Spur, so erfolgt eine Regelung auf eine, vom Fahrer gewünschte, mit Hilfe eines Set-Befehls eingegebene Geschwindigkeit, die im folgenden als "Set-Geschwindigkeit" bezeichnet werden soll.

In DE 42 00 694 A1 wird ein ACC-System beschrieben, bei dem die Regelung vorübergehend außer Kraft gesetzt wird, wenn der Fahrer aktiv in das Fahrgeschehen eingreift, beispielsweise indem er den Fahrtrichtungsanzeiger betätigt. Insbesondere wird somit die Regelung inaktiviert, wenn der Fahrer zum Überholen ansetzt. Nach Ablauf einer gewissen Zeitspanne, wenn der Überholvorgang abgeschlossen ist, setzt die Regelung automatisch wieder ein, wobei im Falle eines dauerhaften Fahrspurwechsels ggf. ein anderes Zielobjekt verfolgt wird, das sich auf der neuen Fahrspur befindet.

In DE 198 21 122 A1 (WO 99/30919) wird ein gattungsgemäßes Verfahren beschrieben, bei dem, wenn der Fahrer - in Regionen mit Rechtsverkehr - den linken Blinkschalter betätigt und damit einen Überholwunsch zu erkennen gibt, die Abstandsregelung nicht inaktiviert wird, sondern vielmehr der Sollabstand zum vorausfahrenden Fahrzeug vorübergehend auf einen bestimmten Mindestwert reduziert wird. Dies hat zur Folge, daß das Fahrzeug zur Vorbereitung des Überholvorgangs automatisch beschleunigt oder weniger stark verzögert als es bei der normalen Abstandsregelung der Fall wäre. Hierdurch wird dem Fahrer das Einfädeln in den fließenden Verkehr auf der Überholspur erleichtert, und der Überholweg wird verkürzt, ohne daß der Fahrer aktiv das Gaspedal betätigen muß. Andererseits wird die Gefahr einer Kollision mit dem vorausfahrenden Fahrzeug vermieden, da stets ein gewisser Mindestabstand zum vorausfahrenden Fahrzeug eingehalten wird.

Durch dieses System wird zwar der Fahrer bei der Einleitung des Überholvorgangs entlastet, so daß er sich stärker auf den rückwärtigen Verkehr konzentrieren kann, doch reagiert das System nicht in allen Verkehrssituationen angemessen. Wenn sich beispielsweise auch auf der Überholspur ein relativ langsam fahrendes Fahrzeug befindet, ist im Anschluß an die Beschleunigungsphase eine relativ starke Verzögerung des Fahrzeugs erforderlich, wenn der Spurwechsel vollzogen wurde und das langsame Fahrzeug auf der Überholspur in den Ortungsbereich des Radars gelangt ist. Die in dieser Situation unangebrachte Beschleunigung und anschließende Verzögerung des Fahrzeugs führt zu einem erhöhten Kräftstoffverbrauch und zu einer Beeinträchtigung des Kornforts und u. U. sogar zu einer Beeinträchtigung der Verkehrssicherheit.

Aus WO 00/36435 ist ein Abstandsregelsystem bekannt, bei dem zusätzlich zu dem Abstand des unmittelbar in der eigenen Spur vorausfahrenden Fahrzeugs auch die Abstände von . Fahrzeugen auf den Nebenspuren berücksichtigt werden.

Aus DE 197 57 063 A1 ist ein weiteres ACC-System bekannt, bei dem das Radarsystem auch die Relativgeschwindigkeiten der Fahrzeuge auf der Überholspur mißt und fortlaufend einen Mittelwert aus diesen Relativgeschwindigkeiten bildet. Wenn ein Überholwunsch des Fahrers er-kennbar ist, wird automatisch auf eine erhöhte, von diesem Mittelwert abhängige Fahrgeschwindigkeit beschleunigt. Auch bei diesem System kann es jedoch zu unangemessenen Reaktionen kommen, da die Geschwindigkeiten der Fahrzeuge auf der Überholspur nur statistisch ausgewertet werden.

In DE 196 37 245 A1 wird ein ACC-System beschrieben, bei dem die Plausibilitätsauswertung der Radarsignale modifiziert wird, wenn der Fahrer durch Betätigen des linken oder rechten Blinkschalters die Absicht zu einem Spurwechsel zu erkennen gibt. In dieser Situation wird der für die Abstandsregelung in Betracht gezogene Fahrstreifen vorübergehend auf die künftige neue Fahrspur erweitert, und für die Abstandsregelung werden im Sinne einer Minimumauswahl sowohl die Fahrzeuge auf der bisherigen Fahrspur als auch die Fahrzeuge auf der künftigen Fahrspur berücksichtigt. Auf diese Weise wird sowohl bei einem Spurwechsel von der rechten auf die linke Fahrspur als auch bei einem Wechsel von der linken auf die rechte Fahrspur eine konsistente Abstandsregelung ermöglicht, es findet jedoch keine Erhöhung der Fahrgeschwindigkeit zur Vorbereitung auf einen Überholvorgang statt.

Aufgabe, Lösung und Vorteile der Erfindung

Aufgabe der Erfindung ist es, ein ACC-System zu schaffen, das den Fahrer bei der Einleitung eines Überholvorgangs unterstützt und dabei in der Lage ist, auf eine Vielzahl unterschiedlicher Verkehrssituationen angemessen zu reagieren.

Diese Aufgabe wird erfindungsgemäß durch die Maßnahmen des Anspruchs 1 sowie die Merkmale des Anspruchs 11 gelöst.

Erfindungsgemäß werden somit bei einem erkennbaren Überholwunsch zumindest die Abstände der beiden Fahrzeuge, die die höchste Relevanz haben, individuell erfaßt und bei der Berechnung der Überholgeschwindigkeit zugrundegelegt. Auf diese Weise läßt sich die Überholgeschwindigkeit in Abhängigkeit von der jeweiligen Verkehrssituation so bestimmen, daß einerseits ein möglichst kurzer Überholweg und ein gefahrloses Einfädeln in den fließenden Verkehr auf der Überholspur ermöglicht wird, andererseits jedoch sowohl ein zu dichtes Auffahren auf das zu überholende Fahrzeug als auch ein zu dichtes Auffahren auf ein auf der Überholspur befindliches Fahrzeug sicher vermieden wird. Der Fahrer kann somit seine Aufmerksamkeit verstärkt auf den rückwärtigen Verkehr konzentrieren. Ein unnötiger Wechsel zwischen Beschleunigungs- und Verzögerungsphasen und die damit verbundene Beeinträchtigung des Komforts und Erhöhung des Kraftstoffverbrauchs wird so weit wie möglich vermieden.

Bei der erfindungsgemäßen Lösung ist die Art und Weise, in der der Abstand zum Fahrzeug auf der Überholspur in die Berechnung der Überholgeschwindigkeit eingeht, im allgemeinen nicht identisch mit der Berücksichtigung des Abstands bei der normalen Abstands- und Geschwindigkeitsregelung, die außerhalb von Überholvorgängen stattfindet und die im folgenden als Stationärregelung bezeichnet werden soll. Hieraus ergibt sich die vorteilhafte Möglichkeit während eines Überholvorgangs vorübergehend auch in den regulären Sicherheitsabstand zum Fahrzeug auf der Überholspur einzutauchen, so daß der Überholvorgang verkürzt und der nachfolgende Verkehr nicht mehr als nötig behindert wird.

Die berechnete Überholgeschwindigkeit ist von der Absolutgeschwindigkeit des eigenen Fahrzeugs, abhängig. Diese Abhängigkeit kann zunächst darin bestehen, daß die Überholhilfe unterhalb einer bestimmten Grenzgeschwindigkeit von beispielsweise 70 km/h vollständig inaktiviert wird. Dem liegt die Überlegung zugrunde, daß Überholvorgänge im allgemeinen nur bei flüssigem Verkehr stattfinden und daß eine Geschwindigkeit unterhalb von etwa 70 km/h auf zähfließenden Verkehr oder Stadtverkehr schließen läßt, so daß die Betätigung des Fahrtrichtungsanzeigers in diesem Fall eher auf einen Abbiegewunsch oder auf einen einfachen Spurwechsel als auf einen Überholwunsch hindeutet. Auch der Übergang zwischen vollständiger Inaktivierung und vollständiger Aktivierung der Überholhilfe kann fließend gestaltet werden, etwa dadurch, daß die Überholgeschwindigkeit durch eine von der Eigengeschwindigkeit des Fahrzeugs abhängige Rampenfunktion begrenzt wird.

vorteilhafte Ausgestaltungen der Erfindung ergeben sich aus den Unteransprüchen.

In einer besonders vorteilhaften Ausführungsform ist die vor und während des Überholvorgangs stattfindende Regelung auf die Überholgeschwindigkeit der normalen Stationärregelung überlagert. Dies bedeutet, daß das Regelsystem für die Stationärregelung auch bei einem erkannten. Überholwunsch und während des Überholvorgangs aktiv bleibt: Die Sollgeschwindigkeiten oder Sollbeschleunigungen, die aus den beiden parallel arbeitenden Regelsystemen resultierten, werden dann beispielsweise additiv überlagert. Äquivalent dazu ist eine Implementierung, bei der für die Stationärregelung, bei der wie üblich nur Fahrzeuge auf der eigenen Spur berücksichtigt werden, die gemessene Relativgeschwindigkeit des vorausfahrenden Fahrzeugs durch eine fiktive Relativgeschwindigkeit ersetzt wird, die gleich der Summe aus der gemessenen Relativgeschwindigkeit und der berechneten Überholgeschwindigkeit ist.

Durch die Überlagerung der beiden Regelsysteme werden fließenden Übergänge zwischen der Stationärregelung und der Überholhilfe ermöglicht. Außerdem läßt sich so eine Unterschreitung der Mindest-Sicherheitsabstände sehr einfach und sehr zuverlässig vermeiden. Wenn sich nämlich der Abstand zum vorausfahrenden Fahrzeug einem kritischen Wert nähert, befiehlt die Stationärregelung eine Reduktion der Sollgeschwindigkeit, die die der Überholgeschwindigkeit entsprechende Geschwindigkeitserhöhung kompensiert, so daß der Abstand zum vorausfahrenden Fahrzeug nicht weiter abnimmt. Auf diese Weise läßt sich insbesondere auch problemlos die Ausnahmesituation beherrschen, daß der Fahrer zwar zunächst durch Setzen des Blinkers einen Überholwunsch anzeigt, dann jedoch erkennt, daß die Verkehrssituation keinen Spurwechsel zuläßt, und auf der bisherigen Spur verbleibt. Auch wenn die Überholhilfe erst mit einer gewissen zeitlichen Verzögerung wieder inaktiviert wird, sorgt dann die Überlagerung oder beiden Regelkreise dafür, daß der Mindestabstand zum vorausfahrenden Fahrzeug nicht unterschritten wird.

Sofern in der Stationärregelung ein Differenzialanteil enthalten ist, der direkt auf Beschleunigungen oder Verzögerungen des vorausfahrenden Fahrzeugs reagiert, so wirkt sich dies aufgrund der Überlagerung auch auf das Verhalten bei zugeschalteter Überholhilfe aus, selbst wenn die im Rahmen der Überholhilfe berechnete Überholgeschwindigkeit nicht direkt von der Beschleunigung oder Verzögerung des vorausfahrenden Fahrzeugs abhängig ist.

Die Funktion der Überholhilfe wird bei einem erkannten Überwunsch augenblicklich aktiviert, ist jedoch vorzugsweise so ausgebildet, daß nach Ablauf einer gewissen Zeitspanne selbsttätig, vorzugsweise mit fließendem Übergang, eine Rückkehr zur Stationärregelung erfolgt. Dies gilt sowohl für den Fall, daß der Überholvorgang abgebrochen wird, als auch für den Fall, daß der Überholvorgang tatsächlich ausgeführt wird. Wahlweise oder zusätzlich kann die Rückkehr zur Stationärregelung jedoch auch dann ausgelöst werden, wenn erkannt wird, daß der Spurwechsel tatsächlich vollzogen wurde. Zur Erkennung des Spurwechsels kann der Umstand ausgenutzt werden, daß das Radar-Echo von ein und demselben Zielobjekt vor und nach dem Spurwechsel aus unterschiedlichen Richtungen empfangen wird. Soweit vorhanden, können jedoch auch die Signale eines Kamerasystems oder anderer Spurerkennungssysteme ausgewertet werden. Dies gilt insbesondere in dem Fall, daß das Fahrzeug zusätzlich mit einem automatischen Spurhaltesystem ausgerüstet ist.

Als Kriterium für die Erkennung eines Überholwunsches des Fahrers bietet sich in erster Linie die Betätigung des Fahrtrichtungsanzeigers an. Wahlweise oder zusätzlich können jedoch auch andere Kriterien herangezogen werden, beispielsweise ein aktiver Lenkeingriff des Fahrers oder, soweit vorhanden, die Signale eines Spurerkennungssystems. Beispielsweise ist es zweckmäßig, die Betätigung' des linken Fahrtrichtungsanzeigers (bei Rechtsverkehr) zu ignorieren, wenn das Spurerkennungssystem feststellt, daß sich das Fahrzeug bereits auf der äußersten linken Spur der betreffenden Richtungsfahrbahn befindet.

Weiterhin ist es denkbar, einen speziellen Schalter vorzusehen, beispielsweise in Kombination mit dem Blinkschalter, mit dem der Fahrer aktiv einen Überholwunsch anzeigen oder bestätigen kann. Falls das Fahrzeug ein Rückraumradar zur Überwachung des rückwärtigen Verkehrs auf der Überholspur aufweist, ist es sogar möglich, bei Annäherung an ein langsameres Fahrzeug automatisch die Verkehrssituation zu bewerten und dem Fahrer einen Überholvorgang vorzuschlagen, den dieser dann entweder bestätigt oder verwirft.

Die Überholgeschwindigkeit, die als Sollwert zu dem Sollwert der Stationärregelung addiert wird, ist vorzugsweise als Relativgeschwindigkeit in bezug auf die aktuelle Eigengeschwindigkeit des Fahrzeugs definiert. Ein unbegrenztes Anwachsen der resultierenden Sollgeschwindigkeit wird durch die zeitliche Begrenzung der Überholhilfe verhindert. Zudem sorgt die Überlagerung mit der Stationärregelung für eine negative Rückkopplung.

Bei vollständig aktivierter Überholhilfe und sehr großen Abständen zu den vorausfahrenden Fahrzeugen wird die Überholgeschwindigkeit vorzugsweise durch einen konstanten oder geschwindigkeitsabhängigen Vorgabewert bestimmt. Bei kleineren Fahrzeugabständen wird dann eine Begrenzung wirksam, die um so restriktiver ist, je kleiner die Abstände zu den vorausfahrenden Fahrzeugen auf der eigenen Spur und der Überholspur sind.

Wahlweise kann die Überholgeschwindigkeit auch einen additiven Anteil enthalten, der zur Relaüvgeschwindigkeit des vorausfahrenden Fahrzeugs auf , der Überholspur proportional ist. Dadurch Wird bei hinreichend großen Fahrzeugabständen eine stärkere Anpassung an den fließenden Verkehr auf der Überholspur erreicht.

Wenn sich innerhalb des Ortungsbereichs des Radars mehrere Fahrzeuge auf der Überholspur befinden, so wird vorzugsweise für jedes dieser Fahrzeuge eine Überholgeschwindigkeit berechnet, die vom Abstand und der Relativgeschwindigkeit dieses Fahrzeugs abhängig ist. Die endgültige Überholgeschwindigkeit wird dann durch Minimumauswahl bestimmt. Auf diese Weise läßt sich beispielsweise auch vorausschauend der Situation Rechnung tragen, daß, während das eigene Fahrzeug zum Überholen ansetzt, das übernächste Fahrzeug auf der Überholspur plötzlich bremst.

Beschreibung von Ausführungsbeispielen

Im folgenden werden Ausführungsbeispiele der Erfindung anhand der Zeichnung näher erläutert.

Es zeigen:

Figur 1     ein Blockdiagramm eines ACC-Systems;

Figur 2     den Ortungsbereich eines mit dem ACC-System nach Figur 1 ausgerüsteten Fahrzeugs auf einer dreispurigen Richtungsfahrbahn;

Figur 3     einen Funktionsgraphen, der die Zeitabhängigkeit einer in dem ACC-System implementierten Überholhilfe angibt; und

Figur 4     einen Funktionsgraphen, der die Geschwindigkeitsabhängigkeit der Überholhilfe angibt.

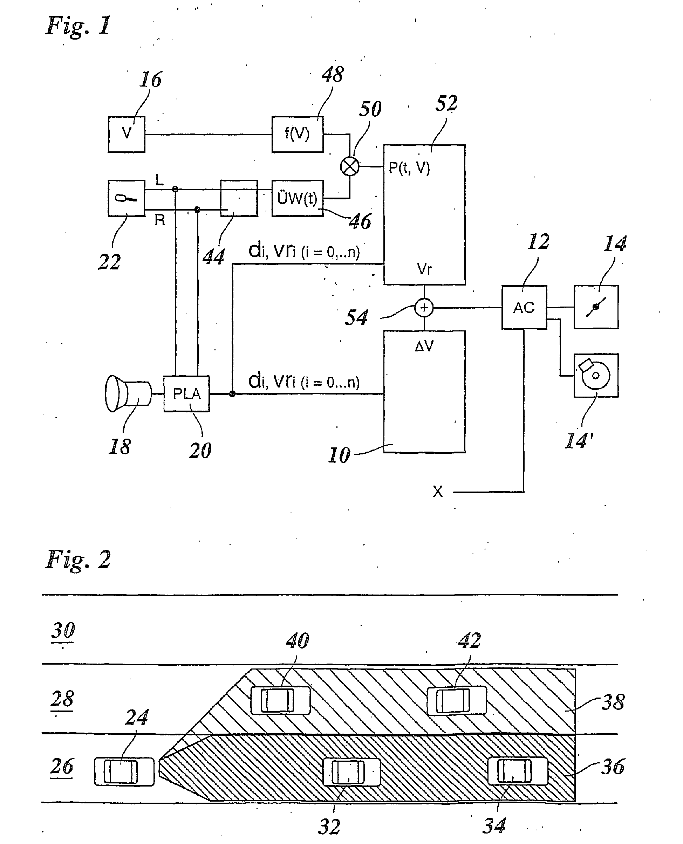

Da der Aufbau und die Funktionsweise eines ACC-Systems, d. h. eines Abstands- und Geschwindigkeitsregelsystems für Kraftzeuge, als solche bekannt sind, zeigt Figur 1 lediglich diejenigen Komponenten eines solchen Systems, die für das Verständnis der Erfindung von Bedeutung sind. Ein herkömmlich aufgebauter Stationärregler 10 wirkt über einen Treiber 12 auf das Antriebs- und Bremssystem des Fahrzeugs, die hier durch eine Drosselklappe 14 und eine Bremse 14' symbolisiert werden, und regelt den Absatand des Fahrzeugs zu einem vorausfahrenden Fahrzeug.

Mit einem winkelauflösenden Radarsystem 18 werden Hindernisse erfaßt, die sich vor dem eigenen Fahrzeug auf der Fahrbahn oder am Fahrbahnrand befinden. Das Radarsystem 18 liefert Richtungs- und Abstandsinformationen, die in einem Plausibilitätsmodul 20 ausgewertet werden. Informationen über die Relativgeschwindigkeiten der erfaßten Objekte lassen sich entweder durch Ableitung der Abstandinfonnationen oder direkt anhand der Dopplerverschiebung des Radar-Echos erfassen. Anhand dieser Informationen ist das Plausibilitätsmodul 20 in der Lage, zwischen vorausfahrenden Fahrzeugen oder sonstigen Hindernissen auf der von dem eigenen Fahrzeug befahrenen Fahrspur und stationären Objekten am Fahrbahnrand oder Fahrzeugen auf Nebenspuren zu unterscheiden. Hierzu können insbesondere bei gekrümmtem Fahrbahnverlauf auch ergänzende Informationen herangezogen werden, beispielsweise der Lenkeinschlag des Fahrzeugs.

Wenn das Plausibilitätsmodul 20 vorausfahrende Fahrzeuge auf der eigenen Fahrspur erkennt, so wird das unmittelbar vorausfahrende Fahrzeug als Zielobj ekt ausgewählt und der Abstand $d_0$ und die Relativgeschwindigkeit $vr_0$ dieses Fahrzeugs werden an den Stationärregler 10 übermittelt. Der Stationärregler 10 veranlaßt dann erforderlichenfalls eine Verminderung der Fahrgeschwindigkeit, so daß ein von der jeweiligen Istgeschwindigkeit V abhängiger Abstand zum vorausfahrenden Fahrzeug eingehalten wird. Dieser Abstand ist durch eine vom fahrer gewählte Sollzeitlücke bestimmt, die den zeitlichen Abstand repräsentiert, in dem die Fahrzeuge denselben Punkt auf der Fahrbahn passieren. Das Ausgangssignal des Stationärreglers 10 ist ein Stationär-Sollwert $\Delta V$, der die jeweils erforderliche Verminderung oder Erhöhung der Fahrzeuggeschwindigkeit angibt.

Dieses Signal wird im Treiber 12 in einen Beschleunigungsbefehl umgerechnet, der dann im Antriebsystem des Fahrzeugs eine entsprechende Verzögerung oder Beschleunigung bewirkt.

Sofern die Fahrbahn frei ist, wird die Fahrzeuggeschwindigeit mit einem hier nicht gezeigten Regelsystem auf eine vom Fahrer gewählte Set-Geschwindigkeit geregelt. Das Ausgangssignal X dieses Regelsystems und ggf. weitere Regleranteile, z.B. für eine Regelung auf stehende Ziele, werden im Treiber 12 mit dem Signal der hier beschriebenen Regeleinrichtung kombiniert.

Ein Blinkschalter 22 liefert Ausgangssignale L und R, die anzeigen, daß der Fahrer den linken bzw. rechten Fahrtrichtungsanzeiger betätigt hat. Anhand dieser Signale erkennt das Plausibilitätsmodul 20, daß der Fahrer beabsichtigt, die derzeit befahrene Fahrspur zu wechseln.

Figur 2 illustriert als Beispiel den Fall, daß ein Fahrzeug 24, das mit dem ACC-System gemäß Figur 1 ausgerüstet ist, auf der äußersten rechten Spur 26 einer dreispurigen Richtungsfahrbahn fährt. Die mittlere und die linke Überholspur dieser Fahrbahn sind mit 28 und 30 bezeichnet. Solange der Blinkschalter 22. unbetätigt ist, wertet das Plausibilitätsmodul 20 nur die Daten von Fahrzeugen 32, 34 aus, die sich in dem in Figur 2 dunkel schraffierten Ortungsbereich 36 des Radars auf der eigenen Spur 26 befinden. Da das Radar nur eine begrenzte Ortungstiefe hat, ist die Anzahl der erfaßbaren Fahrzeuge auf einen bestimmten Maximalwert begrenzt. Das unmittelbar vorausfahrende Fahrzeug 32 wird als Zielobjekt ausgewählt und der Abstandsregelung zugrunde gelegt.

Wenn nun das Signal L vom Blinkschalter 22 eintrifft, so wird im Plausibilitätsmodul 20 der relevante Ortungsbereich um den in Figur 2 hell schraffiert eingezeichneten Bereich 38 vergrößert, so daß in die Auswertung auch die Daten von Fahrzeugen 40, 42 einbezogen werden, die die Überholspur 28 befahren, auf die der Fahrer offenbar wechseln möchte.

Würde sich das Fahrzeug 24 auf der Überholspur 28 befinden und vom Blinkschalter das Signal R eintreffen, so würde in entsprechender Weise der Ortungsbereich auf die rechts benachbarte Spur 26 ausgedehnt werden.

Wenn in Ländern mit Rechtsverkehr in der in Figur 2 gezeigten Situation der linke Fahrtrichtungsanzeiger betätigt wird, so kann dies bedeuten, daß der Fahrer das vorausfahrende Fahrzeug 32 überholen möchte, es kann jedoch auch bedeuten, daß der Fahrer, ohne Überholabsicht, einfach nur aus anderen Gründen die Fahrspur wechseln möchte. Das in Figur 1 gezeigte ACC-System ist dazu ausgebildet, anhand plausibler Kriterien zwischen diesen beiden Möglichkeiten zu unterscheiden und je nach Unterscheidungsergebnis eine unterschiedliche Strategie zu verfolgen. Im Fall einer Überholabsicht wird eine Überholhilfe aktiviert, die später im einzelnen beschrieben werden soll. Im Fall eines Spurwechsels ohne Überholabsicht wird im Stationärregler 10 eine Spurwechselstrategie verfolgt. Nach dieser Strategie wird unter den Fahrzeugen 32, 34, 40, 42, die sich im erweiterten Ortungsbereich befinden, dasjenige Fahrzeug als Zielobjekt ausgewählt, das bei dem eigenen Fahrzeug 24 die geringste (positive oder negative) Sollbeschleunigung hervorruft, beispielsweise das Fahrzeug 40. Zur Vorbereitung eines sicheren Spurwechsels erfolgt dann also eine Abstandsregelung auf das Fahrzeug 40. Falls das Fahrzeug 40 einen sehr geringen Abstand aufweist oder langsamer ist als das Fahrzeug 32 (beispielsweise bei einem Stau), muß die Geschwindigkeit des Fahrzeugs 24 zumindest vorübergehend reduziert werden. Dabei kann im Stationärregler 10 einen Eintauschstrategie verfolgt werden, die es zuläßt, vorübergehend in den eigentlich vorgesehenen Sicherheitsabstand zum Fahrzeug 40 einzutauchen und sich dann wieder auf den regulären Sicherheitsabstand zurückfallen zu lassen. So wird eine übermäßig starke Verzögerung des Fahrzeugs 24 vermieden, die den Fahrkomfort beeinträchtigen oder den Nachfolgeverkehr irritieren könnte.

Für die Entscheidung zwischen Spurwechselstrategie und Überholhilfe werden im gezeigten Beispiel zwei Kriterien herangezogen, nämlich die durch den Blinkschalter 22 angezeigte Richtung des beabsichtigen Spurwechsels und die Istgeschwindigkeit V des Fahrzeugs 24.

In-Ländern mit Rechtsverkehr wird eine Überholabsicht in der Regel nur dann bestehen, wenn der linke Fahrtrichtungsanzeiger betätigt wird. Dies gilt insbesondere in Ländern, in denen, wie in Deutschland, das Rechtsüberholen grundsätzlich verboten ist. Demgemäß wird in dem in Figur 1 gezeigten Beispiel das Signal L über einen Schalter 44 an einen Funktionsgenerator 46 weitergeleitet, dessen Ausgangssignal ÜW(t) einen vermutlichen Überholwunsch des Fahrers repräsentiert. In Ländern mit Rechtsverkehr würde stattdessen das Signal R an den Funktionsgenerator 46 weitergeleitet werden. Die Funktion des Schalters 44 kann auch durch eine geeignete Software realisiert sein, in Verbindung mit einem Parameter, der zwischen Rechtsverkehr und Linksverkehr unterscheidet. Da mit Hilfe des Radarsystems 18 die Geschwindigkeiten der Fahrzeuge auf den verschiedenen Spuren 26, 28 und 30 unterschieden werden können und ggf. auch entgegenkommende Fahrzeuge auf der Gegenfahrbahn detektiert werden können, läßt sich der Parameter für Rechts- oder Linksverkehr auch automatisch aus den Daten des Radarsystemes ableiten.

Das Ausgangssignal ÜW(t) des Funktionsgenerators 46 nimmt im einfachsten Fall nur die Werte 0 und 1 an, wobei der Wert 1 für einen Überholwunsch steht.

Als weiteres Kriterium geht in die Entscheidung die mit dem Geschwindigkeitssensor 16 erfaßt Istgeschwindigkeit V ein. Ein Funktionsgenerator 48 erzeugt als Ausgangssignal einen von der Geschwindigkeit V abhängigen Funktionswert f(V) der unterhalb einer bestimmten unteren Grenzgeschwindigkeit $V_{min}$ von beispielsweise 70 km/h den Wert Null hat und oberhalb dieser-unteren Grenzgeschwindigkeit maximal den Wert 1 annimmt.

Die Ausgangssignale der Funktionsgeneratoren 46 und 48 werden an einem Multiplikationspunkt 50 miteinander multipliziert, und das Produkt P(t, V) wird an ein Überholhilfe-Modul 52 übermittelt.

An das Überholhilfe-Modul 52 werden außerdem die Abstände $d_i$ und ggf.die Relativgeschwindigkeiten $vr_i$ sämtlicher Fahrzeuge 32, 34, 40, 42 übermittelt, die sich im erweiterten Ortungsbereich 36, 38 befinden. Der Index i identifiziert die einzelnen Fahrzeuge. Der Index i = 0 steht dabei für das Fahrzeug 32, das dem Fahrzeug 24 auf der eigenen Spur 26 unmittelbar vorausfährt.

Anhand dieser Daten berechnet das Überholhilfe-Modul 52 eine Überholgeschwindigkeit Vr, die an einem Summationspunkt 54 zu dem Stationär-Sollwert ΔV addiert wird. Auf diese Weise wird die Funktion der Überholhilfe der Station närregelung überlagert.

Gemäß einem ersten Ausführungsbeispiel erfolgt die Berechnung der Überholgeschwindigkeit Vr anhand der folgenden Gleichungen:

$$Vr = MIN(Vr_i; i = 0, ..., n) \tag{1}$$

$$Vr_i = MIN(P(t, V) * Vr_{max}, MAX((2*a*d_i)^{1/2}, Vr_{min})) \tag{2}$$

$$a = MIN(a_0, a(V)) \tag{3}$$

Die Größen Vri in Gleichung (1) sind Überholgeschwindigkeiten, die gemäß gleichung (2) individuell für jedes der Fahrzeuge 32, 34, 40, 42 berechnet werden, unabhängig von der Fahrspur und unabhängig von den übrigen Fahrzeugen. Unter diesen Überholgeschwindigkeiten wird gemäß Gleichung (1) das Minimum ausgewählt. Damit ist ausgeschlossen, daß die Überholgeschwindigkeit im Hinblick auf eines der Fahrzeuge im Ortungsbereich zu hoch gewählt wird.

In Gleichung (2) bezeichnet $Vr_{max}$ einen Vorgabewert, der dann gültig ist, wenn der Abstand $d_i$ zu dem betref-fenden Fahrzeug so groß ist, daß er für die Bemessung der Überholgeschwindigkeit unberücksichtigt bleiben kann. Der Wurzelausdruck $(2*a*d_i)^{1/2}$, entspricht einer Relativgeschwindigkeit des Fahrzeugs 24 in bezug auf das betreffende vorausfahrende Fahrzeug (z. B. 32), die innerhalb des Relativabstands $d_i$ auf 0 abgebaut werden kann, wenn das Fahrzeug 24 konstant mit der Beschleunigung -a verzögert wird. Durch diesen Term wird die Überholgeschwindigkeit begrenzt und verhindert, daß das Fahrzeug zunächst zu stark beschleunigt wird und dann mit einer unerwünscht starken Verzögerung (< -a) wieder verzögert werden muß, um eine Kollision mit dem vorausfahrenden Fahrzeug zu vermeiden. Bei der hier zugrunde gelegten Beschleunigung a handelt es sich gemäß Gleichung (3) um das Minimum aus einer konstanten Beschleunigung $a_0$ und einer variablen Beschleunigung a(V). Die konstante Beschleunigung $a_0$ ist so gewählt, daß sie vom Fahrer oder den Insassen des Fahrzeugs 24 nicht als unkomfortabel oder beunruhigend empfunden wird. Die variable Beschleunigung a(V) repräsentiert die tatsächliche Beschleunigungsfähigkeit des Fahrzeugs, die von der Fahrgeschwindigkeit und ggf. auch von anderen Parametern, beispielsweise von der Zuladung, abhängig sein kann.

Die Größe $Vr_{min}$ in Gleichung (2) repräsentiert eine Mindest-Überholgeschwindigkeit, die dann gelten soll, wenn der Wurzelausdruck bei sehr kleinem Fahrzeugabstand nahezu 0 ist. Diese Mindest-Überholgeschwindigkeit kann auch gleich 0 gesetzt werden. Auch bei positivem Wert führt sie jedoch nicht zu einer Kollisionsgefahr, da ihre Wirkung bei zu starker Annäherung an das vorausfahrende Fahrzeug durch eine entsprechende Abnahme des Stationär-Sollwertes $\Delta V$ kompensiert wird. In jedem Fall ist die obere Grenze für die Überholgeschwindigkeit Vri durch $P(t, V) * Vr_{max}$ gegeben, und diese Größe ist gleich 0, wenn das Produkt $P(t, V)$ gleich 0 ist.

Die Funktion der Überholhilfe soll nun anhand einiger praktischer Beispiele illustriert werden.

Zunächst soll angenommen werden, daß das Fahrzeug 24 mit höherer, Geschwindigkeit auf das Fahrzeug 32 auffährt und die Überholhilfe aktiviert wird ($P(t, V) = 1$. Der Stationärregler 10 würde dann normalerweise eine Verzögerung des Fahrzeugs entsprechend dem abnehmenden Abstand zum Fahrzeug 32 veranlassen. Das Überholhilfe-Modul 52 wirkt dem jedoch dadurch entgegen, daß die Sollgeschwindigkeit um Vr erhöht wird. Das Fahrzeug 24 wird somit nicht oder nur wenig langsamer werden, so daß das Einfädeln auf die Spur 28 erleichtert wird.

Da Vr jedoch nach Gleichung (2) in Abhängigkeit vom Abstand zum Fahrzeug 40 begrenzt wird, läßt sich vermeiden, daß das Fahrzeug 24 so weit auf das Fahrzeug 40 auffährt, daß ein gefahrloser Spurwechsel auf die Spur 28 nicht mehr möglich wäre. Im Regelfall wird jedoch das überholende Fahrzeug 40 eine relativ hohe Geschwindigkeit haben, so daß der zugehörige Abstand $d_i$ rasch zunimmt und die entsprechende Reduktion der Geschwindigkeit des Fahrzeugs 24 relativ klein ausfällt.

Wenn das Fahrzeug 40 nicht vorhanden wäre und der Abstand zum Fahrzeug 32 noch relativ groß ist, könnte sich sogar eine Beschleunigung des Fahrzeugs 24 ergeben, so daß der Überholvorgang verkürzt würde.

Als weiteres Funktionsbeispiel soll der Fall betrachtet werden, daß das Fahrzeug 24 bereits seit einiger Zeit mit konstantem Abstand dem Fahrzeug 32 folgt und der Fahrer erst dann den linken Fahrtrichtungsanzeiger betätigt. In diesem Fall ist der Stationär-Sollwert $\Delta V$ annähernd 0, während die Überholgeschwindigkeit Vr auf jeden Fall positiv ist. Infolgedessen wird das Fahrzeug 24 automatisch beschleunigt. Weil sich das Fahrzeug 40 rasch entfernt und somit die Beschleunigung nicht wirksam begrenzt, entspricht der Sollwert, der letztlich dem Treiber 12 zugeführt wird, einer Geschwindigkeitserhöhung um $Vr_{max}$. Diese Geschwindigkeitserhöhung kann beispielsweise etwa 20 km/h betragen.

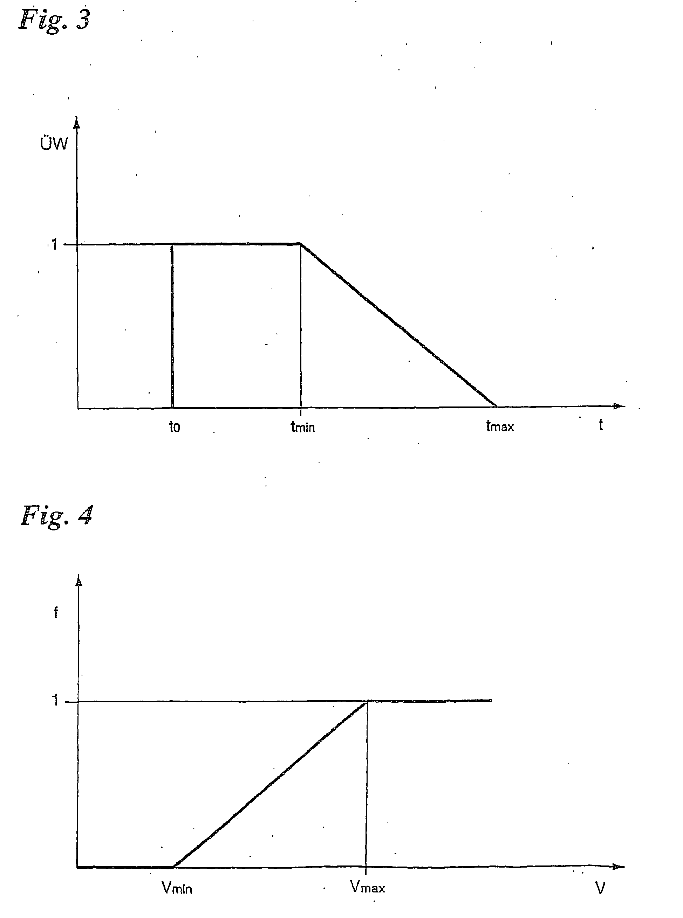

Wie Figur 3 zeigt, ist ÜW(t) eine zeitabhängige Funktion, die auch Zwischenwerte zwischen 0 und 1 annehmen kann. Wenn zum Zeitpunkt $t_0$ der linke Blinker gesetzt wird, steigt die Funktion sprunghaft auf 1 an und bleibt dann für eine gewisse Zeit, beispielsweise für drei Sekunden, konstant auf dem Wert 1. Nach Ablauf dieser Zeitspanne, bei $t_{min}$, nimmt der Funktionswert dann stetig ab, bis er zur Zeit $t_{max}$ beispielsweise nach weiteren drei Sekunden, wieder den Wert 0 erreicht.

Da ÜW(t) als Faktor in das Produkt $P(t, V)$ und damit auch in die Gleichung (2) eingeht, klingt die an den Summationspunkt 54 ausgegebene Überholgeschwindigkeit Vr zwischen $t_{min}$ und tmax auf jeden Fall wieder auf 0 ab, mit der Folge, daß die Stationärregelung allmählich wieder die alleinige Kontrolle gewinnt. Dieses Zeitverhalten ist unabhängig davon, ob das Fahrzeug 24 tatsächlich auf die Überholspur 28 wechselt oder ob es auf der Spur 26 bleibt. In beiden Fällen erfolgt ein allmählicher Übergang zur Abstandsregelung, entweder auf das Fahrzeug 32 oder auf das Fahrzeug 40. Entsprechend wird auch im Plausibilitätsmodul 20 nach einer gewissen Zeitspanne allmählich oder sprunghaft der Ortungsbereich wieder auf die Fahrspur eingeengt, die von dem Fahrzeug tatsächlich befahren wird.

Wie Figur 4 zeigt, kann auch die geschwindigkeitsabhängige Funktion f(V) Zwischenwerte zwischen 0 und 1 annehmen. Bis zur Geschwindigkeit $V_{min}$ (z. B. 70 km/h) hat die Funktion den Wert 0. Im Geschwindigkeitsbereich zwischen $V_{min}$ und $V_{max}$ (z. B. 100 km/h) nimmt der Funktionswert linear auf 1 zu und bleibt dann konstant auf 1, so daß die Überholhilfe erst bei Geschwindigkeiten oberhalb von etwa 100 km/h ihre volle Wirksamkeit entfaltet. Im Zwischenbereich zwischen $V_{min}$ und $V_{max}$ ist die Überholhilfe zwar wirksam, doch ist die Überholgeschwindigkeit Vr dann entsprechend kleiner. Dies hat den Vorteil, daß bei langsamer fließendem Verkehr rasante Beschleunigungsmanöver vermieden werden.

Unabhängig von der Geschwindigkeitsabhängigkeit der Funktion f(V) können auch die Werte $Vr_{max}$ und $Vr_{min}$ in Gleichung (2) geschwindigkeitsabhängig sein.

Bei einem anderen Ausführungsbeispiel erfolgt die Berechnung der Überholgeschwindigkeit Vr im Überholhilfe-Modul 52 nach den folgenden Gleichungen:

$$Vr = MIN(Vr', (a * d_0)^{1/2}) \qquad (4)$$

$$Vr' = MIN(vr_i; i = 1, ..., n) \qquad (5)$$

$$vr_i = MAX(0, vr_0 + (a \cdot d_0)^{1/2}) \qquad\qquad (6)$$

In Gleichungen 4 und 6 hat die Beschleunigung a die gleiche Bedeutung wie in Gleichungen (2) und (3). Das Fehlen des Faktors 2 im Wurzelausdruck in gleichung (6) (vergl. Gleichung (2)) bedeutet, daß hier als relevanter Abstand nur der halbe Abstand zum vorausfahrenden Fahrzeug benutzt wird, so daß eine größer Sicherheitsmarge erreicht wird.

Bei dieser Ausführungsform wird die Überholgeschwindigkeit Vr' zunächst ohne Berücksichtigung des auf derselben Spur unmittelbar vorausfahrenden Fahrzeugs 32 berechnet. Wahlweise können auch sämtliche Fahrzeuge auf der eigenen Spur, also auch das Fahrzeug 34, unberücksichtigt bleiben. Der Abstand zum unmittelbar vorausfahrenden Fahrzeug 32 findet hier nur in Gleichung (4) Berücksichtigung, in der Form einer abstandabhängigen Begrenzung der Überholgeschwindigkeit Vr'.

Die Gleichung (5) unterscheidet sich weiterhin von der Gleichung (2) dadurch, daß zu dem abstandsabhängigen Wurzelterm die Relativgeschwindigkeit vri des vorausfahrenden Fahrzeugs, also beispielsweise des Fahrzeugs 40 oder 42 addiert wird. Da diese Relativgeschwindigkeiten auch negativ sein können, erfolgt weiterhin eine Begrenzung nach unten auf die Überholgeschwindigkeit 0.

Da bei dieser Ausführungsform die Überholgeschwindigkeit auch von der Relativgeschwindigkeit der Fahrzeuge 40, 42 auf der Überholspur abhängig ist, wird die letztlich gültige Überholgeschwindigkeit Vr um so kleiner, je langsamer das langsamste der Fahrzeuge 40, 42 auf der Überholspur ist. Wenn beispielsweise das Fahrzeug 42 plötzlich bremst, kann auch dies schon zu einer Begrenzung der Überholgeschwindigkeit führen. Dies ist auch sinnvoll, weil dann absehbar ist, daß auch der Fahrer des Fahrzeugs 40 bremsen wird, so daß auch das Fahrzeug 24 verzögert werden muß, wenn der Fahrer zum Überholen ansetzt.

Gemäß einer weiteren Ausgestaltung der Erfindung ist es auch möglich, zusätzlich auch die Relativbeschleunigungen der beteiligten Fahrzeuge 32, 34, 40, 42 zu berücksichtigen.

Während weiterhin in den gezeigten Ausführungsbeispielen die Überholgeschwindigkeit im Sinne einer Minimumauswahl begrenzt wird, um den Abständen der verschiedenen Fahrzeuge Rechnung zu tragen, ist es in anderen Ausführungsformen auch möglich, die Überholgeschwindigkeit fahrzeugweise oder für alle Fahrzeuge zusammen in der Form einer gewichteten Summe zu bilden, die sich aus geschwindigkeits- und/oder abstandsabhängigen Anteilen zusammensetzt.

**Patentansprüche**

1. Verfahren zur Unterstützung eines Überholvorgangs bei Kraftfahrzeugen (24) mit einer Abstands- und Geschwindigkeitsregeleinrichtung, bei dem, wenn kein Überholwunsch vorliegt, eine Stationärregelung entweder auf eine vom Fahrer gewählte Set-Geschwindigkeit oder auf einen vom Fahrer gewähltem Abstand zu einem vorausfahrenden Fahrzeug (32) durchgeführt wird und bei dem wenn die mit Sensoren (18) erfaßte Verkehrssituation oder ein Eingriff des Fahrers auf einen Überholwunsch schließen läßt, eine Überholhilfe-Funktion ausgeführt wird, bei der vorübergehend auf eine erhöhte Überholgeschwindigkeit geregelt wird, wobei die Abstände zu auf einer Überholspur (28) befindlichen Fahrzeugen (40, 42) gemessen werden, **dadurch gekennzeichnet, daß** die Uberholgeschwindigkeit in Abhängigkeit von den Abständen ($d_0$, $d_i$) des zu überholenden Fahrzeugs (32) und mindestens des unmittelbar vorausfahrenden Fahrzeugs (40) auf der Überholspur (28) berechnet wird, daß die Überholhilfe-Funktion nur bei Fahrzeuggeschwindigkeiten oberhalb einer vorgegebenen Grenzgeschwindigkeit ($V_{min}$) aktiviert wird und daß ein für die Überholgeschwindigkeit ($V_r$) repräsentatives Ausgangssignal gemäß einer geschwindigkeitsabhängigen Funktion (f(V)) begrenzt wird, die unterhalb der Grenzgeschwindigkeit ($V_{min}$) den Wert null hat und von der Grenzgeschwindigkeit ab stetig zunimmt.

2. Verfahren nach Anspruch 1, **dadurch gekennzeichnet, daß** im Falle eines Überholwunsches eine Überholhilfe-Funktion parallel zu der Stationärregelung ausgeführt wird und das der Überholgeschwindigkeit ($V_r$) entsprechende Ausgangssignal mit einer von der Stationärregelung gelieferten Stellgröße ($\Delta V$) überlagert wird.

3. Verfahren nach Anspruch 2, **dadurch gekennzeichnet, daß** die Stellgröße der Stationärregelung ein Stationär-Sollwert ($\Delta V$) für eine Erhöhung oder Absenkung der Fahrgeschwindigkeit ist und die Überholgeschwindigkeit ($V_r$) zu dem Stationär-Sollwert ($\Delta V$) addiert wird.

4. Verfahren nach einem der vorstehenden Ansprüche, **dadurch gekennzeichnet, daß** die Überholhilfe-Funktion nach einem erkannten Überholwunsch nur für eine begrenzte Zeitspanne aktiv ist.

5. Verfahren nach Anspruch 4, **dadurch gekennzeichnet, daß** das für die Überholgeschwindigkeit ($V_r$) repräsentative Ausgangssignal gemäß einer zeitabhängigen Funktion (ÜW(t)) begrenzt ist, deren Funktionswert nach einer gewissen Zeitspanne stetig auf null abnimmt.

6. Herfahren nach einem der vorstehenden Ansprüche, **dadurch gekennzeichnet, daß** für jedes der erfaßten vorausfahrenden Fahrzeuge (32, 40) eine gesonderte fahrzeugspezifische Überholgeschwindigkeit ($Vr_i$) berechnet wird und daß die endgültige Überholgeschwindigkeit (Vr) durch Minimumauswahl aus den fahrzeugspezifischen Überholgeschwindigkeiten bestimmt wird.

7. Verfahren nach Anspruch 6, **dadurch gekennzeichnet, daß** die fahrzeugspezifische Überholgeschwindigkeit ($Vr_i$) nach oben durch eine vom Abstand ($d_i$) des betreffenden Fahrzeugs abhängige Größe begrenzt wird.

8. Verfahren nach Anspruch 7, **dadurch gekennzeichnet, daß** die abstandsabhängige Größe proportional zur Quadratwurzel des Abstands ($d_i$) ist.

9. Verfahren nach einem der Ansprüche 1 bis 5, **dadurch gekennzeichnet, daß** die Überholgeschwindigkeit auch von den Relativgeschwindigkeiten ($vr_i$) zumindest der auf der Überholspur (28) befindlichen Fahrzeuge (40, 42) abhängig ist.

10. Verfahren nach Anspruch 9, **dadurch gekennzeichnet, daß** für jedes der erfaßten Fahrzeuge (40, 42) auf der Überholspur (28) eine fahrzeugspezifische Überholgeschwindigkeit ($Vr_i$) berechnet wird, die von der Relativgeschwindigkeit ($vr_i$) und dem Abstand ($d_i$) des betreffenden Fahrzeugs abhängig ist und daß die endgültige Überholgeschwindigkeit (Vr) durch Minimumauswahl aus den fahrzeugspezifischen Überholgeschwindigkeiten ($Vr_i$) bestimmt wird; mit zusätzlicher Begrenzung nach oben durch eine Größe, die vom Abstand ($d_0$) des auf der eigenen Spur (26) unmittelbar vorausfahrenden Fahrzeugs (32) abhängig ist.

11. Vorrichtung zur Durchführung des Verfahrens nach einem der vorstehenden Ansprüche,

   - mit einem auf das Antriebssystem (14) eines Fahrzeugs (24) einwirkenden Treiber (12),
   - mit einem Abstandssensor (18) zur Erfassung des Abstands vorausfahrender Fahrzeuge (32, 34, 40, 42),
   - mit einem Stationärregler (10), der in der Form eines Stationär-Sollwertes ($\Delta V$) einen Befehl zum Erhöhen oder Absenken der Fahrzeuggeschwindigkeit an den Treiber (12) liefert und entweder die Geschwindigkeit des Fahrzeugs auf eine vom Fahrer gewählte Set-Geschwindigkeit oder den Abstand des Fahrzeugs zum auf derselben Spur vorausfahrenden Fahrzeug (32) regelt,
   - und mit einer Einrichtung (22, 44, 46, 48) zur Erkennung eines Überholwunsches des Fahrers,
   - wobei der Abstandssensor (18) dazu ausgebildet ist, den Abstand zu Fahrzeugen (40, 42) auf einer Überholspur (28) zu erfassen,
   - und wobei ein Überholhilfe-Modul (52) vorgesehen ist, das bei erkanntem Überholwunsch den Stationär-Sollwert ($\Delta V$) um eine Überholgeschwindigkeit (Vr) erhöht,

   **dadurch gekennzeichnet,**

   - **daß** die Überholgeschwindigkeit (Vr) vom Abstand des unmittelbar vorausfahrenden Fahrzeugs (32) auf derselben Spur und vom Abstand mindestens des unmittelbar vorausfahrenden Fahrzeugs (40) auf der Überholspur abhängig ist,
   - **daß** ein erster Funktionsgenerator (48) vorgesehen ist, der dazu ausgebildet ist, die Überholgeschwindigkeit (Vr) gemäß einer geschwindigkeitsabhängigen Funktion (f(V)) zu begrenzen, die unterhalb einer bestimmten Grenzgeschwindigkeit ($V_{min}$) den Wert 0 hat und oberhalb der bestimmten Grenzgeschwindigkeit ($V_{min}$) maximal den Wert 1 annimmt,
   - **daß** ein zweiter Funktionsgenerator (46) vorgesehen ist, dessen Ausgangssignal (ÜW(t)) die Werte O und 1 annimmt, wobei der Wert 1 für einen Überholwunsch steht,
   - und **daß** die Ausgangssignale der beiden Funktionsgeneratoren (46, 48) an einem Multiplikationspunkt (50) multipliziert werden und das Produkt an das Überholhilfe-Modul (52) übermittelt wird.

**Claims**

1. Method for assisting an overtaking manoeuvre in motor vehicles (24), having a distance and velocity control device, in which method, if no overtaking request occurs, steady-state control is carried out either to a set velocity, selected by the driver, or to a distance, selected by the driver, from a vehicle (32) travelling ahead, and in which method, if the traffic situation, which is sensed with sensors (18), or an intervention by the driver in response to an overtaking request permits the conclusion to be drawn that an overtaking assistance function is implemented in which the velocity is temporarily adjusted to an increased overtaking velocity, wherein the distances from vehicles (40, 42) located on an overtaking lane (28) are measured, **characterized in that** the overtaking velocity is calculated as a function of the distances ($d_0$, $d_i$) from the vehicle (32) which is to be overtaken and at least the vehicle (40) travelling directly ahead on the overtaking lane (28), **in that** the overtaking assistance function is activated only at vehicle velocities above a predefined limiting velocity ($V_{min}$), and **in that** an output signal which is representative of an overtaking velocity ($V_r$) is limited in accordance with a velocity-dependent function (f(V)) which has the value zero below the limiting velocity ($V_{min}$) and increases continuously from the limiting velocity.

2. Method according to Claim 1, **characterized in that**, in the case of an overtaking request, an overtaking assistance function is implemented parallel to the steady-state control, and a manipulated variable ($\Delta V$) which is supplied by the steady-state controller is superimposed on the output signal which corresponds to the overtaking velocity ($V_r$).

3. Method according to Claim 2, **characterized in that** the manipulated variable of the steady-state controller is a steady-state setpoint value ($\Delta V$) for an increase or decrease in the velocity, and the overtaking velocity ($V_r$) is added to the steady-state setpoint value ($\Delta V$).

4. Method according to one of the preceding claims, **characterized in that** the overtaking assistance function is active only for a limited time period after an overtaking request has been detected.

5. Method according to Claim 4, **characterized in that** the output signal which is representative of the overtaking velocity ($V_r$) is limited in accordance with a time-dependent function (ÜW(t)) whose function value decreases continuously to zero after a specific time period.

6. Method according to one of the preceding claims, **characterized in that** a separate vehicle-specific overtaking velocity ($V_r$) is calculated for each of the sensed vehicles (32, 40) travelling ahead, and **in that** the ultimate overtaking velocity ($V_r$) is determined by minimum selection from the vehicle-specific overtaking velocities.

7. Method according to Claim 6, **characterized in that** the vehicle-specific overtaking velocity ($V_{ri}$) is limited in the upward direction by a variable which is dependent on the distance ($d_i$) of the respective vehicle.

8. Method according to Claim 7, **characterized in that** the distance-dependent variable is proportional to the square root of the distance (di).

9. Method according to one of Claims 1 to 5,
**characterized in that** the overtaking velocity is also dependent on the relative velocities ($v_{ri}$) at least of the vehicles (40, 42) located on the overtaking lane (28).

10. Method according to Claim 9, **characterized in that** a vehicle-specific overtaking velocity ($V_{ri}$), which is dependent on the relative velocity ($V_{ri}$) and the distance ($d_i$) of the respective vehicle, is calculated for each of the sensed vehicles (40, 42) on the overtaking lane (28), and **in that** the ultimate overtaking velocity ($V_r$) is determined by minimum selection from the vehicle-specific overtaking velocities ($V_{ri}$), with additional limitation in the upward direction by means of a variable which is dependent on the distance ($d_0$) from the vehicle (32) which is travelling directly ahead on the driver's own lane (26).

11. Device for carrying out the method according to one of the preceding claims,

    - having a driving device (12) which acts on the drive system (14) of a vehicle (24),
    - having a distance sensor (18) for sensing the distance from vehicles (32, 34, 40, 42) travelling ahead,
    - having a steady-state controller (10) which supplies, in the form of a steady-state setpoint value ($\Delta V$), an instruction for increasing or decreasing the vehicle velocity to the driving device (12), and either adjusts the velocity of the vehicle to a set velocity selected by the driver or the distance of the vehicle from the vehicle (32) travelling ahead on the same lane,
    - and having a device (22, 44, 46, 48) for detecting an overtaking request of the driver,
    - wherein the distance sensor (18) is designed to sense the distance from vehicles (40, 42) on an overtaking lane (28),
- and wherein an overtaking assistance module (52) is provided which, when an overtaking request is detected, increases the steady-state setpoint value ($\Delta$V) by an overtaking velocity ($V_r$),

**characterized**

- **in that** the overtaking velocity ($V_r$) is dependent on the distance from the vehicle (32) travelling directly ahead on the same lane and on the distance of at least the vehicle (40) travelling directly ahead on the overtaking lane,
- **in that** a first function generator (48) is provided which is designed to limit the overtaking velocity ($V_r$) according to a velocity-dependent function (f(V)) which has the value 0 below a specific limiting velocity ($V_{min}$) and assumes at maximum value of 1 above the specific limiting velocity ($V_{min}$),
- **in that** a second function generator (46) is provided whose output signal (ÜW (t)) assumes the values 0 and 1, wherein the value 1 stands for an overtaking request,
- and **in that** the output signals of the two function generators (46, 48) are multiplied at a multiplication point (50), and the product is transmitted to the overtaking assistance module (52).

**Revendications**

1. Procédé pour faciliter une manoeuvre de dépassement de véhicules automobiles (24) comprenant un dispositif de régulation de la distance et de la vitesse, dans lequel, lorsque l'on ne veut pas dépasser, une régulation stationnaire est effectuée soit à une vitesse de consigne choisie par le conducteur, soit à une distance choisie par le conducteur par rapport à un véhicule (32) se déplaçant devant lui, et dans lequel, lorsque la situation de trafic détectée par des capteurs (18), ou lorsqu'une intervention du conducteur laisse supposer un souhait de dépassement, une fonction d'assistance au dépassement est réalisée, dans laquelle on passe temporairement à une vitesse de dépassement supérieure, les distances par rapport aux véhicules (40, 42) se trouvant sur une voie de dépassement (28) étant mesurées, **caractérisé en ce que** la vitesse de dépassement est calculée en fonction des distances ($d_0$, $d_i$) par rapport au véhicule à dépasser (32) et à au moins le véhicule se déplaçant immédiatement devant (40) sur la voie de dépassement (28), **en ce que** la fonction d'assistance au dépassement n'est activée que pour des vitesses du véhicule au-dessus d'une vitesse limite prédéterminée ($V_{min}$) et **en ce qu'**un signal de sortie représentatif pour la vitesse de dépassement ($V_r$) est limité en fonction d'une fonction (f(V)) dépendant de la vitesse, qui a une valeur nulle en dessous de la vitesse limite ($V_{min}$) et qui augmente constamment à partir de la vitesse limite.

2. Procédé selon la revendication 1, **caractérisé en ce que** dans le cas d'un souhait de dépassement, une fonction d'assistance au dépassement est effectuée parallèlement à la régulation stationnaire et le signal de sortie correspondant à la vitesse de dépassement ($V_r$) est superposé à une valeur de commande ($\Delta$V) fournie par la régulation stationnaire.

3. Procédé selon la revendication 2, **caractérisé en ce que** la valeur de commande de la régulation stationnaire est une valeur de consigne stationnaire ($\Delta$V) pour une augmentation ou une réduction de la vitesse de conduite et la vitesse de dépassement ($V_r$) est ajoutée à la valeur de consigne stationnaire ($\Delta$V).

4. Procédé selon l'une quelconque des revendications précédentes, **caractérisé en ce que** la fonction d'assistance au dépassement, après que l'on a détecté un souhait de dépassement, n'est activée que pendant un intervalle de temps limité.

5. Procédé selon la revendication 4, **caractérisé en ce que** le signal de sortie représentatif de la vitesse de dépassement ($V_r$) est limité en fonction d'une fonction (ÜW(t)) dépendant du temps, dont la valeur de fonction diminue constamment jusqu'à zéro après un certain intervalle de temps.

6. Procédé selon l'une quelconque des revendications précédentes, **caractérisé en ce que** pour chacun des véhicules détectés (32, 40) se déplaçant devant, on calcule une vitesse de dépassement ($V_{ri}$ distincte et spécifique au véhicule, et **en ce que** la vitesse de dépassement finale ($V_r$) est déterminée par une sélection minimale à partir des vitesses de dépassement spécifiques aux véhicules.

7. Procédé selon la revendication 6, **caractérisé en ce que** la vitesse de dépassement ($V_{ri}$) spécifique au véhicule est limitée vers le haut par une valeur dépendant de la distance ($d_i$) par rapport au véhicule en question.

8. Procédé selon la revendication 7, **caractérisé en ce que** la valeur dépendant de la distance dans la direction longitudinale du véhicule est proportionnelle à la racine carrée de la distance ($d_i$).

9. Procédé selon l'une quelconque des revendications 1 à 5, **caractérisé en ce que** la vitesse de dépassement dépend aussi des vitesses relatives ($Vr_i$) d'au moins les véhicules (40, 42) se trouvant sur la voie de dépassement (28).

10. Procédé selon la revendication 9, **caractérisé en ce que** pour chacun des véhicules détectés (40, 42) sur la voie de dépassement (28), on calcule une vitesse de dépassement ($V_{ri}$) spécifique au véhicule, qui dépend de la vitesse relative ($Vr_i$) et de la distance ($d_i$) du véhicule en question, et **en ce que** la vitesse de dépassement finale ($V_r$) est déterminée par sélection minimale des vitesses de dépassement ($V_{ri}$) spécifiques aux véhicules, avec une limitation supplémentaire vers le haut par une valeur qui dépend de la distance ($d_0$) du véhicule (32) situé directement devant sur la voie (26) du véhicule proprement dit.

11. Dispositif pour mettre en oeuvre le procédé selon l'une quelconque des revendications précédentes,

   - comprenant un actionneur (12) agissant sur le système d'entraînement (14) d'un véhicule (24),
   - comprenant un capteur de distance (18) pour détecter la distance par rapport aux véhicules situés devant lui (32, 34, 40, 42),
   - comprenant un régulateur stationnaire (10) qui fournit à l'actionneur (12), sous forme d'une valeur de consigne stationnaire (ΔV), un ordre d'augmenter ou de réduire la vitesse du véhicule et qui régule soit la vitesse du véhicule à une vitesse de consigne choisie par le conducteur ou la distance du véhicule par rapport au véhicule (32) se déplaçant devant lui sur la même voie,
   - et comprenant un dispositif (22, 44, 46, 48) pour reconnaître un souhait de dépassement du conducteur,
   - le capteur de distance (18) étant réalisé de manière à détecter la distance par rapport aux véhicules (40, 42) sur une voie de dépassement (28),
   - et un module d'assistance au dépassement (52) étant prévu, lequel augmente la valeur de consigne stationnaire (ΔV) à une vitesse de dépassement ($V_r$) en cas de détection d'un souhait de dépassement,

   **caractérisé en ce que**

   - la vitesse de dépassement ($V_r$) dépend de la distance par rapport au véhicule (32) directement devant lui sur la même voie, et de la distance par rapport à au moins le véhicule (40) se déplaçant directement devant lui sur la voie de dépassement,
   - un premier générateur de fonction (48) est prévu, lequel est réalisé de telle sorte que la vitesse de dépassement ($V_r$) soit limitée suivant une fonction ($f(V)$) dépendant de la vitesse, qui a la valeur 0 en dessous d'une vitesse limite déterminée ($V_{min}$) et qui augmente au-dessus de la vitesse limite déterminée ($V_{min}$) jusqu'à la valeur 1 au maximum,
   - un deuxième générateur de fonction (46) est prévu, dont le signal de sortie (ÜW(t)) prend les valeurs 0 et 1, la valeur 1 correspondant à un souhait de dépassement,
   - et les signaux de sortie des deux générateurs de fonction (46, 48) sont multipliés en un point de multiplication (50) et le produit est transmis au module d'assistance au dépassement (52).

*Fig. 1*

*Fig. 2*

**Fig. 3**

**Fig. 4**

**EP 1 381 530 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4200694 A1
- DE 19821122 A1
- WO 9930919 A
- WO 0036435 A
- DE 19757063 A1
- DE 19637245 A1